# EUROPEAN PATENT SPECIFICATION

(11) **EP 1 353 545 B1**
(45) Date of publication and mention of the grant of the patent: **25.07.2007**
(21) Application number: 02704678.8
(22) Date of filing: 24.01.2002
(51) Int. Cl.: A01G 3/08, B23D 45/10, B23D 45/16, B23D 49/00

(54) **DOUBLE-SAW PRUNING APPARATUS**
DOPPELSÄGE ENTASTUNGSAPPARATUS
DISPOSITIF D'ELAGAGE A SCIE A COUPE MONTANTE ET DESCENDANTE

(43) Date of publication of application: 22.10.2003
(73) Proprietor: Di Marco, Emidio, 65010 Montebello di Bertona (IT)
(72) Inventor: Di Marco, Emidio, 65010 Montebello di Bertona (IT)
(74) Representative: Sangiacomo, Fulvia
(86) International application number: PCT/EP2002/001039
(87) International publication number: WO 2002/058457

(56) References cited:
- EP-A- 0 257 105
- EP-A- 0 501 911
- BE-A- 884 632
- DE-U- 29 805 580
- US-A- 3 715 805

## Description

The present invention relates to a mechanical pruning device for fruit, wood and ornamental trees.

### State of the Art

Pruning devices for fruit and wood trees, capable of cutting small branches or trunks, have already been proposed, but they are not suitable to cut those small branches or trunks which, before being cut, usually from the top to the bottom, tend to bend as a result of their weight, thus breaking the trunk bark without coming off. This is why most of the operators in this sector prefer to use traditional pruning devices, i.e. manual saws, which are difficult to use, risky and have a low efficiency rate.

The document EP-A-0 257 105 is demonstrative of the state of the art. It disclosed a saw device comprising two saw blades opposite each other, but wherein a single blade is driven and moved of reciprocation motion . The other blade is at an angle with respect to the moving blade, but it is fixed or it is movable towards the moving blade. Thus, the cut of a tree limb is only effected on one side of the limb, by the single reciprocating saw blade, while the other, fixed blade drives the limb against the moving blade.

Also in US-A-3 715 805 a pruning device is disclosed, which comprises a single, reciprocating cutting blade. The limb to be cut is driven against the moving cutting blade by an oscillating support member that may be manually or automatically operated.

### Objects and summary of the Invention

A primary object of this invention is to provide a simple, cheap, user-friendly and efficient device, that can be easily inserted among the small branches and trunks, thus reaching any position and direction, without the problems that the traditional technique poses.

Another object of the invention is to provide a double-effect plant pruning device, that can be used to simultaneously cut small branches and trunks on two opposite sides, usually from the top to the bottom and vice versa, thus preventing any bark tearing.

A further object of the invention is to provide a plant pruning device that can be equipped with different interchangeable tools, depending on the plant variety, type, diameter and on the weakness or hardness of the parts to be removed.

The above-mentioned objects and the relevant advantages are achieved by means of a pruning device according to claim 1.

The device of the invention can be equipped with rectilinear, toothed, reciprocating and adjustable-angle blades, with circular blades or rectilinear and circular blades at the same time, that can be used each other alternatively.

### Brief description of the drawings

The invention will be described in detail by referring to the attached drawings, that must not be considered as binding an wherein:
Fig. 1 is a sectional view of the unit controlling the two reciprocating blades and the two circular blades;
Fig. 1A and 1B are, according to the arrows I and II of Fig. 1, a schematic view of the control systems of the two reciprocating blades;
Fig. 2 is a device equipped with the reciprocating and circular blades;
Fig. 3 is a section of the device, equipped with the reciprocating blades;
Fig. 4 is a view similar to the view of Fig. 3, but it also includes a return spring, combined with a cutting blade;
Fig. 4a is a view of a device with an additional discharge system, combined with the reciprocating cutting blades;
Fig. 5 is a different view of a modified rectilinear cutting blade;
Fig. 6 is view of a device equipped with two circular cutting blades;
Fig. 7 is a view of a drive system which controls the circular blades of a device like the one shown in Fig. 6;
Fig. 8 and 9 show some examples of connections between the device and a power battery; and
Fig. 10 shows a sectional view of the holding bar and the routing of the electrical cable in the bar.

### Detailed Description of the Invention

The devices of the invention comprises a body 20, which contains the drive components to operate at least two cutting blades 23, 24; 62, 63, starting from a motor 34, that can be connected with a holding and steering bar 32.

The body 20 is made of light-weight and heavy-duty materials, like aluminium alloys, titanium, magnesium, etc. It is composed of two complementary shells, an upper shell 21 and a lower shell 22, which hold and contain the drive components.

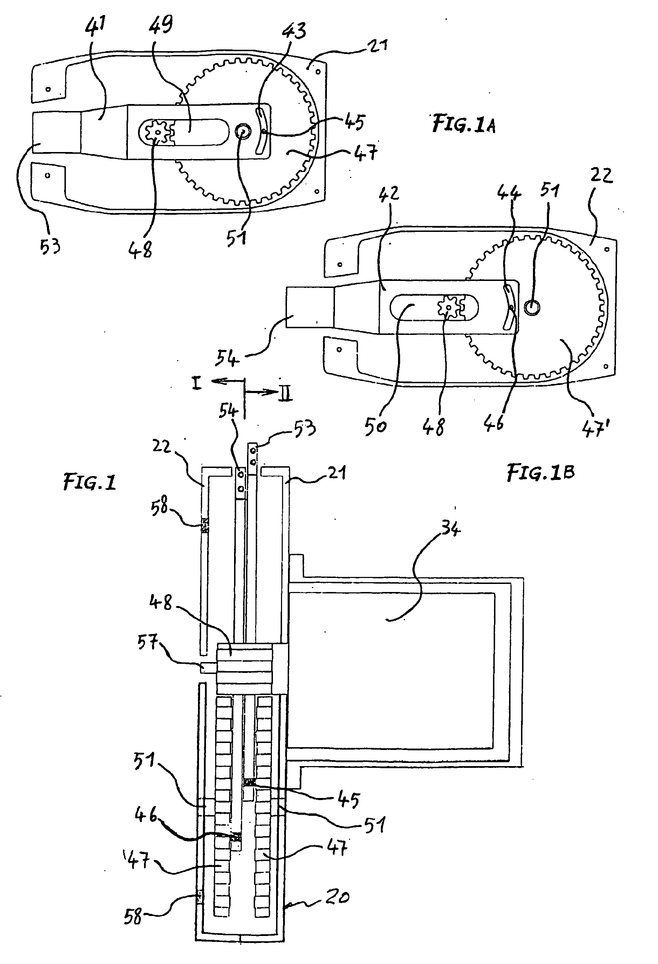

The drive components include an upper connecting rod 41, a lower connecting rod 42, with an end tab 53, 54, respectively facing a body 20 hole. The first connecting rod 41 is controlled by the relevant crank, that is composed of the gear 47, rotating around the axis 51 and holding a non-centred pin 45, that is inserted in a curved slot 43 on the connecting rod. Similarly, the connecting rod 42 is controlled by the gear 47', rotating on the axis 51, with a non-centred pin 46 that is inserted in the slot 44 of the connecting rod -Figures 1, 1 A and 1B.

The gears 47, 47' are linked and rotatd by a drive pinion 48, that is controlled by the motor system 34. In the shown example, the pinion 48 enters in sliding slots 49, 50 on the connecting rods 41, 42; its free end has a fast-on power takeoff 57, that can be accessed through the hole on the side of the body 20 -Fig. 1.

The motor system 34 is preferably a DC system, within a case on the body 20, although the motor can also be placed away from the body 20, along the holding bar, or as a stand-alone unit. It can be a hydraulic, pneumatic or even and petrol engine.

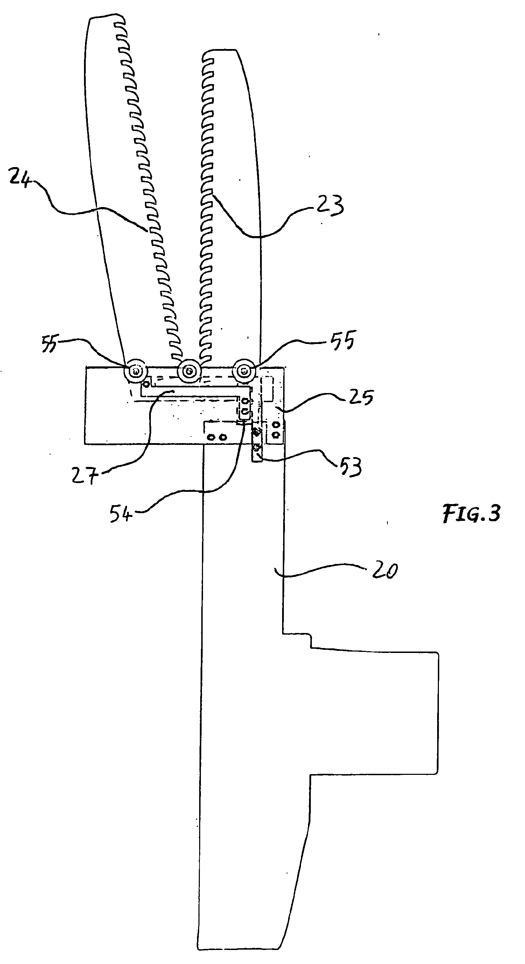

In a first configuration, the tab of a connecting rod (in the drawings the first connecting rod 41) is fixed to a the first cutting blade 23, i.e. the upper blade, while the tab of the second connecting rod, i.e. the connecting rod 42, is fixed to a second cutting blade 24, i.e. the lower blade, and a goose-neck joint 27 is placed in between- Fig. 3. The blades 23, 23 are rectilinear; their teeth face each other and, thanks to their link with the connecting rods, they have a simultaneous rectilinear reciprocating movement, to saw the affected part from opposite sides. When the connecting rods are offset by one stroke, as shown in Figures. 1, 1A and 1B, the blades will be offset, too so that the forward stroke of one blade corresponds to the backward stroke of the second blade.

The upper blade 23 cuts the branch or small trunk, while the lower blade 24 marks or partially cuts the opposite side of the same branch or small trunk, thus preventing any bark tearing.

The two cutting blades 23 and 24 can also be anchored to the same connecting rod; in such a case they will have a simultaneous reciprocating movement, but since their teeth are opposite, one blade will act during the stroke in one direction while the second blade will be effective during the stroke in the opposite direction.

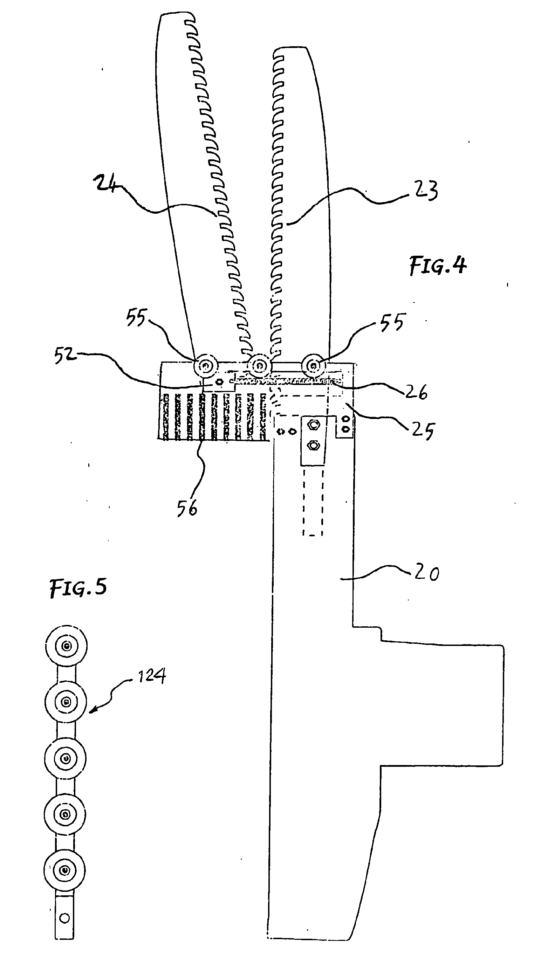

When anchored on the goose-neck 27, the lower blade 24 distance from the upper blade 23 does not change. However, the distance between the two cutting blades should be adjusted when better access to branches and small trunks of different sizes is required. Thus, a roller sliding block 25, with one or more rollers 55, is preferably mounted on the front part of the body 20. The rollers 55 face the cutting blades and support the section to be cut, when the tool is close to it. The second cutting blade 24 can be connected not only with the goose-neck as previously described, but also with a slider 52, guided by the sliding block 25 transversally to the cutting blades-Fig. 4. The slider is driven by a return spring 26 which moves the second blade closer to the first blade, thus improving the cutting of the branch or small trunk. Moreover, the slider 52 can be stopped in any position along the sliding block by means of the anchoring bolts 56, so that the gap between the cutting blades 23, 24 can be adjusted.

To be noted that the second cutting blade 24, which can be anchored on the goose-neck 27 or move with the slider 52, can be adjusted and blocked at any angle in relation to the first blade 23. The two cutting blades can be flush or offset, according to the needs. The second toothed cutting blade 24 can be replaced by a roller blade 124, shown in Fig. 5, that marks or cuts a branch or a small trunk on the side opposite to the first cutting blade 23, that actually cuts it.

The cutting blades 23, 24 can be associated with a discharge element 125, protruding on one or both sides of the upper blade 23 -Fig.4a. This component 125 can be fixed or adjustable; it comes in touch with the part being cut and facilitates the cutting. The discharge element 125 is more efficient when this element and the lower blade are at an angle in relation to the upper blade.

The body 20, on the opposite side of the cutting blades, has a tubular section 29, used as a handle 30 to control the device or as a connecting point for the telescopic catch-bar 32, that can be extended according to the needs.

The tubular section 29 can be mounted on the body 20 at a pre-set angle, that cannot be changed. However, in order to facilitate the adjustment of the device in relation to the handle 30 or the catch-bar 32, the tubular section 29 is connected with the body 20 by means of a joint 28, that can be adjusted in one or more directions. The tubular section 29 also has an element 31, that can be linked with the end of the catch-bar 32 and blocked by means of a lock-ring 33, thus forming a rigid unit.

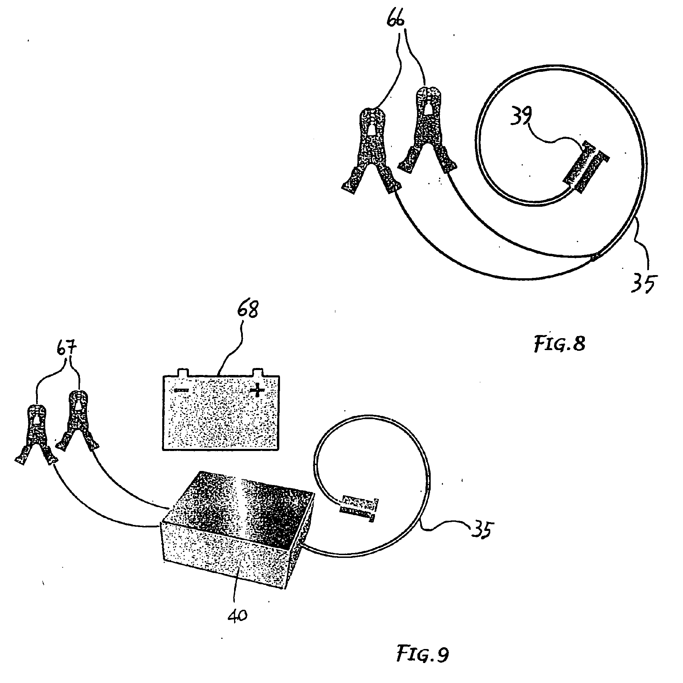

The connection and release of the bar 32 and the supply to the electrical motor 34, when installed on the device, are facilitated by the electrical cable 35, coming from the motor 34, routed through the tubular section 29 and then connected to the outlet 36, located on the free end of the tubular section, and to a similar cable 35', routed along the catch-bar 32. One end of this cable has a plug 37, that can be plugged into the outlet 36 on the tubular section 29, while the other end has a plug 38, that can be connected with a power source. The power source can be the battery of a tilling machine or, for example, a shoulder battery 68. The plug 38 on one end of the cable 35' can be plugged in the outlet 39 connected by means of the pliers 66 with the battery poles - Fig. 9 - without any electronic motor control and automatic stop device 40, in case of a device jam.

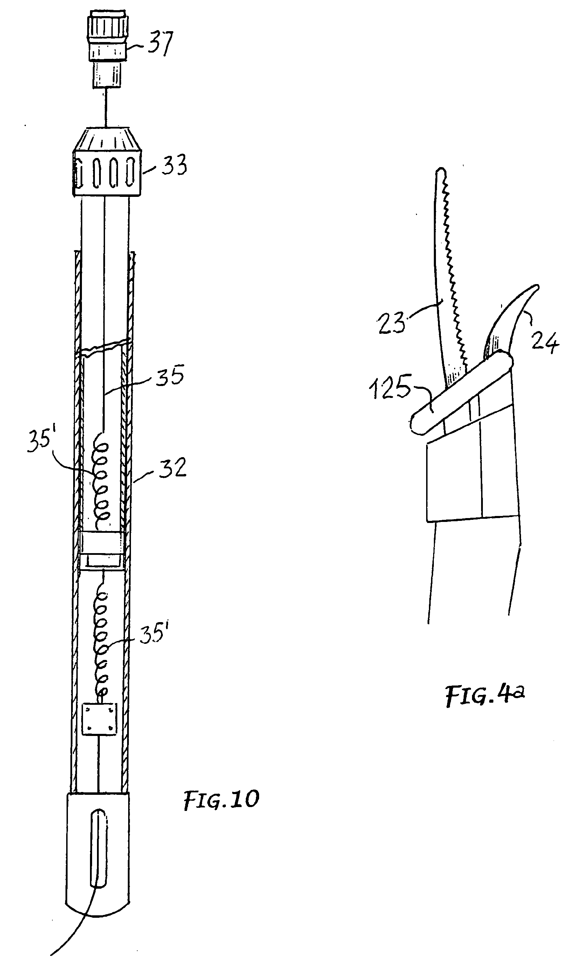

At least a section of the cable 35', routed through the catch-bar 32, can be given a helical shape -Fig. 10- thus increasing the length of the available cable to extend the telescopic bar; when the bar is shortened it does not affect the cable section going from the bar to the power supply source.

The device can be equipped and used with two rectilinear reciprocating cutting blades 23, 24, that mark and cut the branches or small trunks from opposite sides. This device can also be equipped with at least two disc or circular blades 62, 63, that are controlled by a drive system connected with a drive pinion 48 inside the body 20; the rotary motion is given by the motor unit 34.

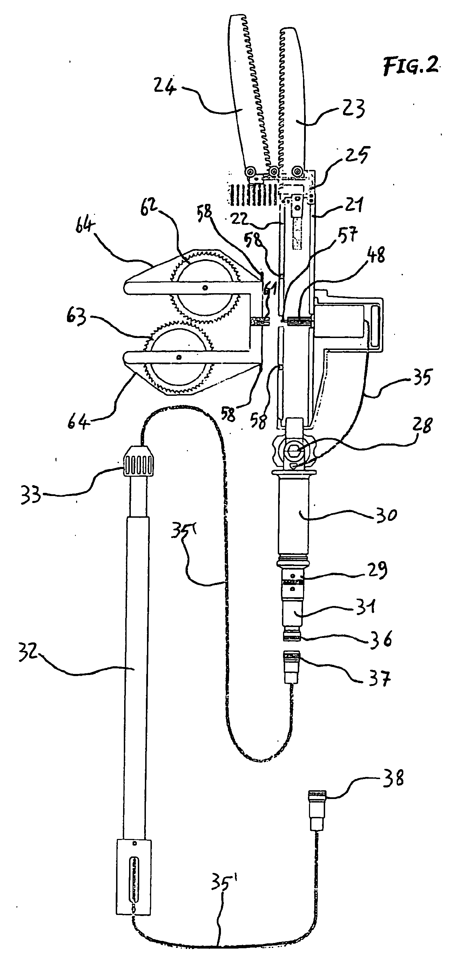

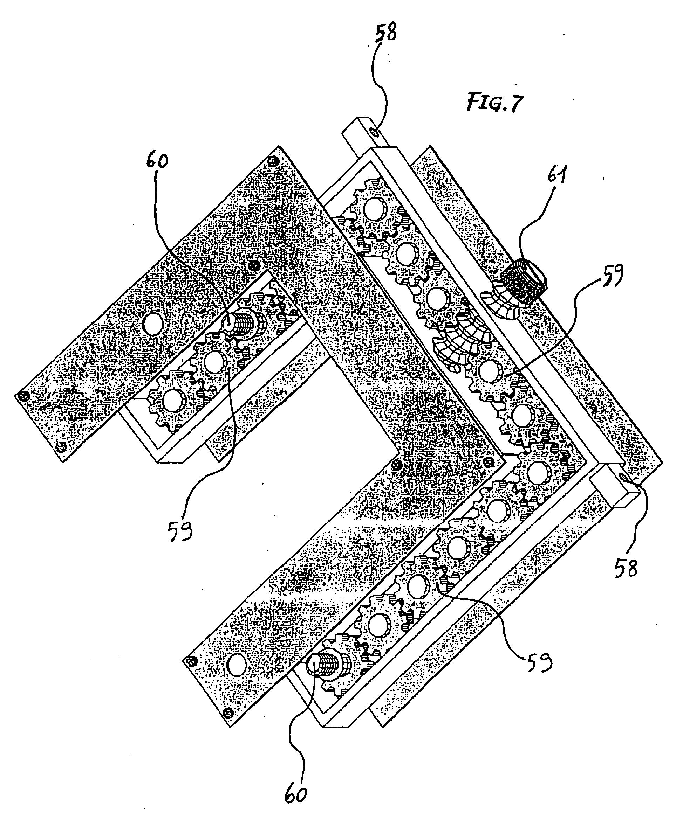

In the configuration shown in Figures 2, 6 and 7, a drive unit includes a U-shaped box 58 with two opposite flaps 58', where anchoring screws are placed, to mount it on the body 20 of the device. The U-shaped unit 58 contains a gear drive that controls the rotation of the disc blades 62, 63. This drive unit also includes a shaft 61, that can be connected with the power takeoff 57, which is integral with the drive pinion 48, fixed by means of a worm screw 61'. It engages the first two gears 59 on opposite sides. Each gear controls a final gear, that is keyed on a shaft 60, by means of other gears 59'.

The shaft 61 is located on the centreline of the U-shaped unit 58, while the shafts 60 are located along the parallel arms of the body. The disc cutting blades 62, 63 are anchored onto these shafts, i.e. one blade is on one arm and the second blade on the other arm of the U-shaped unit and the protruding sections are protected by the cover 64.

If the gears holding the shafts 60 are carefully selected, the disc blades can rotate in the same or in the opposite direction. Moreover, the blades can be flush or offset, according to the needs. Also in this case the upper blade 62 cuts the branch or small trunk, while the lower blade 63 marks or partially cuts the branch or trunk from the side opposite to the upper cutting blade.

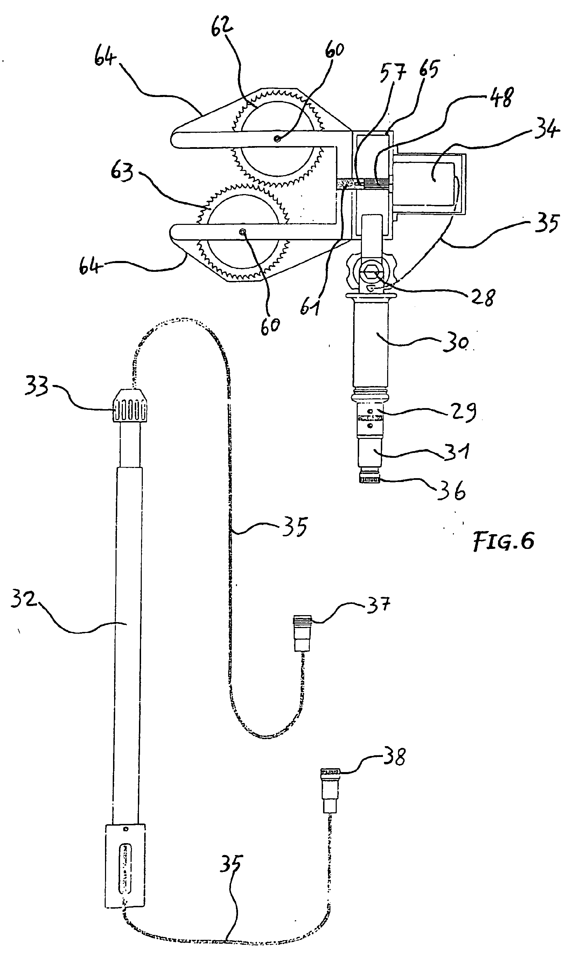

Therefore the same device can be equipped with two rectilinear reciprocating blades and/or and least two circular cutting blades. However, as shown in the configuration of Fig. 6 and without departing from the scope of this invention, the device can be equipped with at least two circular blades 62, 63. In such a case, it may have a different body 65, which no longer contains the connecting rods and cranks.

## Claims

1. A plant pruning device comprising a pruning body (20) enclosing drive components (47,47'; 41,42; 59,61) connected to a motor unit (34), a telescopic catch-bar (32) connectable with said pruning body to use the device at various heights, and at least two cutting blades (23, 24; 62, 63) placed one in front the other, **characterized in that** both cutting blades are connected and moved with said drive components in the pruning body, whereby a first cutting blade (23) is designed to cut the plant portion to be removed, while a second cutting blade (24) at least marks an area to be cut on the side opposite to the fist cutting blade.

2. The device according to claim 1, wherein both cutting blades (23, 24) are rectilinear blades, and said drive components include at least a connecting rod system (47, 41) controlled by said motor unit (34) through a drive pinion (48), both cutting blades being attached to the connecting rod system and provided with reciprocating motion simultaneously.

3. The device according to claim 1, wherein both cutting blades (23, 24) are rectilinear blades, and said drive components include two connecting rods (47,41; 47',42) simultaneously driven by said motor unit (34) each through a respective driven pinion (48), the first cutting blade (23) being attached to a connecting rod system and the second cutting blade (24) to the other connecting rod system so that said cutting blades are provided with reciprocating motion in a same or opposite direction.

4. The device according to claim 2 or 3, wherein the second cutting blade is at an angle in relation to the first cutting blade, the angle being adjustable.

5. The device according to claim 4, wherein the cutting blades are spaced each other, a distance between the cutting blades being adjustable.

6. The device according to claim 5, wherein the first cutting blade (23) is in a fixed position and the second cutting blade (24) is associated with a slider (52) movable crosswise and locking in various positions.

7. The device according to claim 6 , wherein the second cutting blade (24) is associated with a roller sliding block (55) connected to the pruning body, wherein said slider (52) moves along said sliding block and wherein said slider is connected to a return spring (26) acting to move said second cutting blade towards the first cutting blade.

8. The device according to any of the previous claims, wherein the cutting blades (23, 249 are associated with a discharge clement (125), protruding at least on one side of the first cutting blade and designed for sliding along the cut plant portion, said discharge element (125) being at a fixed angle or adjustable in relation to said cutting blade.

9. The device according to claim 1, wherein the cutting blades are disc blades (62, 63) mounted on parallel shafts (60), wherein said drive components include two set of toothed gears located on opposite sides of a drive unit (61) controlled by the motor unit (34), and wherein the shaft of a disc cutting blade matches the axis of a gear of a first set of gears and the shaft of the other disc cutting blades matches the axis of a gear of a second set of gears.

10. The device of claim 9, wherein said drive components are mounted on a U-shaped body having two parallel arm connected by a cross-piece, and wherein the disc cutting blades (62, 63) are flush with the parallel arms and the drive unit (61) is on a centreline of he cross-piece of said U-shaped body.

11. The device according to claim 10, wherein said U-shaped body is fixed on one side of the pruning body (20), and said drive unit (61) is aligned and connected with an axis driven by the motor unit (34), said axis including the drive pinion (48) designed for controlling the connecting rod/s of the rectilinear cutting blades.

12. The device according to any of the previous claims, wherein the pruning body (20) is provided with a tubular section (29) for the connection of the telescopic catch-bar (32), said tubular section having an outlet connected with a cable that is routed towards the motor on the device, the other end of said cable being connected with a plug mounted on the catch-bar, which in turn is connected with a motor power source.

## Patentansprüche

1. Werkzeug zum Beschneiden von Bäumen, bestehend aus einem Gehäuse (20) mit den Antriebsorganen (47, 47', 41, 42; 59-61), welche an einen Motor (34) angeschlossen sind, einer ausziehbaren Stromabnehmerstange (32), die an das besagte Gehäuse für den Gebrauch des Werkzeugs auf verschiedenen Höhen anschließbar ist, und mindestens zwei Schneiden (23,24; 62,63), eine gegenüber der anderen angebracht, **dadurch gekennzeichnet, dass** beide Schneiden mit den Antriebsorganen im Gehäuse der Baumschere verbunden sind und von ihnen bewegt werden, und wo eine erste Schneide (23) dazu bestimmt ist, den zu entfernenden Teil des Baumes abzuschneiden, während eine zweite Schneide (24) von der gegenüberliegenden Seite der ersten Schneide aus wenigstens einen zu entfernenden Teil einschneidet.

2. Werkzeug gemäß Patentanspruch 1, bei dem beide Schneiden (23,24) geradlinig sind und die Antriebsorgane wenigstens ein Schubstangensystem (47,41) haben, das vom genannten Motor (34) durch ein Führungsritzel (48) betätigt wird, und beide Schneiden an das genannte Schubstangensystem angeschlossen sind und sich gleichzeitig hin- und herbewegen können.

3. Werkzeug gemäß Patentanspruch 1, bei dem beide Schneiden (23, 24) geradlinig sind und die genannten Antriebsorgane zwei Schubstangen (47,41; 47',42) haben, die gleichzeitig von dem genannten Motor (34), jede durch ein Führungsritzel (48), betätigt werden, und bei dem die erste Schneide (23) an das eine Schubstangensystem, und die zweite Schneide (24) an das andere Schubstangensystem angeschlossen ist, damit sich die Schneiden in die gleiche oder in die entgegengesetzte Richtung hin- und herbewegen können.

4. Werkzeug gemäß Patentanspruch 2 oder 3, bei dem die zweite Schneide gegenüber der ersten Schneide verkantet ist, und die Abwinklung eingestellt werden kann.

5. Werkzeug gemäß Patentanspruch 4, bei dem eine Schneide von der anderen distanziert, und der Abstand zwischen den Schneiden veränderbar ist.

6. Werkzeug gemäß Patentanspruch 5, bei dem die erste Schneide (23) in einer festen Position und die zweite Schneide (24) an einem quer zu bewegenden und in verschiedene Positionen zu blockierenden Läufer (52) befestigt ist.

7. Werkzeug gemäß Patentanspruch 6, bei dem die zweite Schneide (24) mit einem an das genannte Schneidewerkzeuggehäuse angeschlossenen Rollengleitblock (55) verbunden ist, und der genannte Läufer (52) längs dem Gleitblock zu bewegen ist, und bei dem der genannte Läufer an einer Zugfeder (26) angeschlossen ist, die dazu neigt, die zweite Schneide zur ersten Schneide hin zu bewegen.

8. Werkzeug gemäß irgendeinem der vorhergehenden Patentansprüche, bei dem die Schneiden (23,24) mit einem Entladeelement (125), welches wenigstens auf einer Seite der ersten Schneide hervortritt und dazu bestimmt ist, auf dem geschnittenen Teil des Baumes zu gleiten, verbunden ist, und das genannte Entladeelement (125) eine feststehende Neigung hat oder entsprechend der Schneide zu regeln ist.

9. Werkzeug gemäß Patentanspruch 1, bei dem die Schneiden auf parallelen Wellen (60) montierte Scheiben (62,63) sind, die genannten Antriebsorgane aus zwei Reihen Zahnrädern, auf den gegenüberliegenden Teilen eines von einem Motor (34) betätigten Führungsorgans (61), bestehen, und wobei die Welle einer Scheibe der Achse eines Zahnrads der einen Zahnräderreihe, und die Welle der anderen Scheibe der Achse eines Zahnrads der anderen Zahnräderreihe entspricht.

10. Werkzeug gemäß Patentanspruch 9, bei dem die genannten Antriebsorgane an der Kante eines U-förmigen Körpers mit zwei durch ein Querteil verbundenen parallelen Armen montiert sind, und bei dem sich die Scheiben (62,63) auf der Höhe der parallelen Arme und das Führungsorgan (61) auf dem Querteil des besagten U-förmigen Körpers befinden.

11. Werkzeug gemäß Patentanspruch 10, bei dem der besagte U-förmige Körper an einer Seite des Schneidewerkzeuggehäuses (20) befestigt ist, und das Führungsorgan (61) einer von einem Motor (34) betätigten Achse angeglichen und mit ihr verbunden ist, sowie die besagte Achse ein Führungsritzel (48) zur Steuerung der Zugstange/n und der Schneiden umfasst.

12. Werkzeug gemäß irgendeiner der vorhergehenden Patentansprüche, bei dem das Schneidewerkzeuggehäuse (20) zum Anschluss der ausziehbaren Stromabnehmerstange (32) mit einem röhrenförmigen Schaft (29) ausgerüstet ist und letzterer ein mit einem Kabel verbundenes Endstück hat, welches den Motor am Werkzeug erreicht, und das andere Ende des besagten Kabels mit einem auf der Stromabnehmerstange montierten Stecker verbunden, und welcher seinerseits an eine Stromquelle zur Speisung des Motors angeschlossen ist.

## Revendications

1. Dispositif d'élagage des plantes comprenant un corps de l'émondoir (20) incluant des organes de transmission (47,47', 41,42; 59-61) connectés à un appareil moteur (34), une tige télescopique de prise (32) connectable audit corps de l'émondoir pour l'utilisation du dispositif à diverses hauteurs, au moins deux lames de coupe (23,24; 62,63) placées une en face de l'autre, **caractérisées en ce que** toutes les deux lames de coupe sont reliées et mues par lesdits organes de transmission dans le corps de l'émondoir, où une première lame de coupe (23) est destinée à tailler la partie de la plante à éliminer, tandis qu'une deuxième lame de coupe (24) au moins incise une partie à tailler du côté opposé de la première lame de coupe.

2. Dispositif d'élagage selon la revendication 1, dans lequel toutes les deux lames de coupe (23, 24) sont des lames rectilignes et les organes de transmission comprennent au moins un système à bielle (47,41) actionné par ledit appareil moteur (34) à travers un pignon conducteur (48), toutes les deux lames de coupe étant reliées audit système à bielle et dotées de mouvement alternatif simultané.

3. Dispositif d'élagage selon la revendication 1, dans lequel toutes les deux lames de coupe (23, 24) sont des lames rectilignes et lesdits organes de transmission comprennent deux bielles (47,41; 47',42) actionnées simultanément par ledit appareil moteur (34) chacune à travers un pignon conducteur (48), la première lame de coupe (23) étant connectée à un système à bielle et la deuxième lame de coupe (24) à l'autre système de bielle de façon à ce que lesdites lames de coupe soient dotées de mouvement alternatif, dans le même sens ou en sens opposé.

4. Dispositif d'élagage selon les revendications 2 ou 3, dans lequel la deuxième lame de coupe forme un angle par rapport à la première lame de coupe, l'angle étant réglable.

5. Dispositif d'élagage selon la revendication 4, dans lequel les lames de coupe sont espacées l'une par rapport à l'autre, la distance entre les lames de coupe étant variable.

6. Dispositif d'élagage selon la revendication 5, dans lequel la première lame de coupe (23) est dans une position fixe et la deuxième lame de coupe (24) est fixée à un curseur (52) mobile dans une direction transversale et blocable dans diverses positions.

7. Dispositif d'élagage selon la revendication 6, dans lequel la deuxième lame de coupe (24) est associée à un bloc de glissement à galets (55) relié audit corps de l'émondoir (20), dans lequel ledit curseur (52) est mobile le long dudit bloc de glissement, et dans lequel ledit curseur est relié à un ressort de rappel (26) visant à déplacer ladite deuxième lame de coupe vers la première lame de coupe.

8. Dispositif d'élagage selon n'importe laquelle des revendications précédentes, dans lequel les lames de coupe (23, 24) sont associées à un élément de décharge (125), saillant au moins d'un côté de la première lame de coupe et destiné à glisser sur la partie d'arbre coupée, ledit élément de décharge (125) étant à inclinaison fixe ou réglable par rapport à ladite lame de coupe.

9. Dispositif d'élagage selon la revendication 1, dans lequel les lames de coupe sont des lames à disque (62,63) montées sur des arbres parallèles (60), dans lequel lesdits organes de transmission sont constitués de deux ordres de roues dentées placés du côté opposé à un organe conducteur (61) actionné par un appareil moteur (34, et dans lequel l'arbre d'une lame de coupe à disque correspond à l'axe d'une roue dentée d'un premier ordre de roues dentées et l'arbre de l'autre lame de coupe à disque correspond à l'axe d'une roue dentée d'un deuxième ordre de roues dentelées.

10. Dispositif d'élagage selon la revendication 9, dans lequel lesdits organes de transmission sont montés à bord d'un corps profilé à U ayant deux bras parallèles joints par une portion transversale, et dans lequel les lames de coupe à disque (62,63) sont au niveau des bras parallèles et l'organe conducteur (61) est sur la ligne médiane dudit corps à U.

11. Dispositif d'élagage selon la revendication 10, dans lequel ledit corps U est fixé à un côté du corps de l'émondoir (20) et ledit organe conducteur (61) est aligné et accouplé avec un axe actionné par l'appareil moteur (34), ledit axe incluant un pignon conducteur (48) destiné à commander la ou les bielle(s) des lames de coupe.

12. Dispositif d'élagage selon n'importe laquelle des revendications précédentes, dans lequel le corps d'émondage (20) est muni d'un ergot tubulaire (29) pour la connexion de la tige télescopique de prise (32), ledit ergot tubulaire ayant une extrémité reliée par un câble qui arrive à l'appareil moteur sur l'outil, l'autre extrémité dudit câble étant connecté à une prise montée sur la tige de prise, qui à son tour est connectée par une source de puissance alimentant l'appareil moteur.
